# EUROPEAN PATENT SPECIFICATION

(11) **EP 1 545 746 B1**
(45) Date of publication and mention of the grant of the patent: **14.11.2007**
(21) Application number: 03749406.9
(22) Date of filing: 04.09.2003
(51) Int. Cl.: B01D 53/00, B01D 47/00, F23J 15/02

(54) **METHOD AND APPARATUS FOR TREATING EXHAUST FROM COMBUSTION DEVICES**
VERFAHREN UND VORRICHTUNG ZUR BEHANDLUNG VON ABGAS AUS VERBRENNUNGSANLAGEN
PROCEDE ET APPAREIL PERMETTANT DE TRAITER LES FLUX D'ECHAPPEMENT PROVENANT DE DISPOSITIFS DE COMBUSTION

(30) Priority: 05.09.2002 CL 20482002; 16.10.2002 CL 23772002; 16.10.2002 CL 23782002; 24.12.2002 CL 29742002; 10.03.2003 CL 4622003
(43) Date of publication of application: 29.06.2005
(73) Proprietor: Environmental Control Technologies, Inc., Wilmington, DE 19801-1120 (US)
(72) Inventor: RIQUELME MEDINA, Pedro Alejandro, Las Condes, 3068 Santiago (CL); DONOSO AGUIRRE, Cristian, Las Condes, 3068 Santiago (CL)
(74) Representative: Hilleringmann, Jochen
(86) International application number: PCT/US2003/027701
(87) International publication number: WO 2004/022203

(56) References cited:
- EP-A- 0 691 153
- FR-A- 2 586 204
- US-A- 5 080 696

## Description

### Field of Invention

The present invention relates to a method and apparatus for treating the exhaust streams from combustion devices such as internal combustion engines, furnaces, etc. to reduce the emissions, e.g., particulate and gaseous components, thereof.

### Background

Presently the problem created by contaminant emissions from combustion devices is a significant contribution to pollution and related environmental concerns. A number of measures for reducing the contaminant emissions (i.e., both in particulate and gaseous form) in combustion exhaust streams have been proposed.

For example, a number of proposals to use filters to capture and remove particulates and environmentally noxious gases, such as ozone, sulfurous acids, and carbon monoxide, among others, have been made. A variety of filters have been proposed, including for example, electrostatic filters, sleeve type filters, plate filters, and others. The cost and efficacy of different filter systems varies and cheaper, more cost effective solutions are desired.

It has also been proposed to rinse exhaust streams with showers of water or other liquid(s) to wash from the exhaust streams particulates and noxious gases. Unfortunately, these methods do not provide desired pollution reduction or are too costly.

In the case of conventional gas washing devices applied to mobile sources, specifically exhaust pipes of vehicles, the main disadvantage is the necessity for using great amounts of water. High volumes of fluid are necessary because the washing liquid is applied to a high velocity, high temperature (e.g., typically at temperatures of well over 100°C or more) stream that leads to significant evaporation into the exhaust stream, and resulting emission into the ambient environment of a moisture-enriched exhaust stream. CL-A-615-99 describes a typical spraying device located onto the exhaust pipe, which produces a water curtain for conveying the particles to a container or tray adjacent to the pipe, producing the above-described problems.

CL-B-40,474 discloses a wet filter for cleaning flue gases comprising an external cylindrical shroud and a coil at the upper end of the shroud. Smoke passing through the coil is washed by water, but the system does not effectively retain small particulates or noxious gases from the flue stream.

A need exists for means to reduce the emission of pollutants from the exhaust streams of internal combustion engines which are more effective and cheaper to implement and operate than current available means.

EP 0 691 153 A1 discloses a two-stage downflow flue gas treatment condensing heat exchanger system which allows for flue gas to be passed into a two-stage housing at an upper end of the housing. The flue gas is channelled through a first stage of the housing having a first condensing heat exchanger which cools the flue gas. The flue gas is then channelled through a second stage having a second condensing heat exchanger which is located directly beneath the first stage and the first condensing heat exchanger for further cooling the flue gas. The flue gas travels in a downward direction only through the housing and exits the housing at the lower end of the housing beneath the second stage. A collection tank is located beneath the second stage of the housing for collecting liquids, condensate, particulates and reaction products.

US 5,080,696 discloses a process for reducing the content of gaseous acid pollutants soluble in water and contained in fumes discharged from an incineration plant, in the course of which the fumes are cooled by means of indirect heat exchange with a cold fluid, thus producing a condensate containing acid pollutants, and in which, after this cooling stage, the fumes still containing acid pollutants are washed using the condensate as washing liquid.

FR 2 586 204 A1 discloses a device for depolution of fumes resulting from combustion or incineration of products. The device includes a treatment space in which the fumes circulate, a heat exchanger situated in the treatment space and through which a cooling fluid flows for lowering the temperature to below 40° C such that the acids and the vapour condensate, an aspersion ramp situated in the treatment space and delivering a washing liquid for a physico-chemical action of the different acids, the washing liquid being constituted by the aqueous acid solution resulting from the condensation of the acids and of the vapour, means for contemplation of the washing liquid and of the condensates situated downstream of the treatment space in relation to the sense of circulation of the fumes, and heating means for the fumes originating from the part downstream of the treatment space.

### Summary of Invention

The method of the invention is defined by claim 1. The device of the invention is defined by claim 13.

The present invention relates to a method and apparatus for treating the exhaust stream from a combustion device to reduce the emission of pollutants, e.g., particulates and noxious gases, into the environment. By combustion device is meant a device which bums fuel to generate heat or power. Illustrative examples include internal combustion engines such as gasoline engines or diesel engines which are used to power vehicles (e.g., automobiles, trucks, buses, water craft, trains, etc.), and in fixed locations (e.g., to generate electricity, heat, or mechanical power for buildings, factories, or equipment, as well as other devices which burn fuel to generate heat or steam or dispose of waste. Illustrative examples of the kinds of fuel which may be burned include gasoline kerosene, diesel fuel, oil, coal, natural gas, wood and other biomass fuels, municipal and residential waste, etc. For ease of explanation, the invention will be described with reference to internal combustion engines; it will be understood, however, that the invention is applicable to other combustion devices, e.g., trash incinerators or heating furnaces.

In brief summary, the method comprises:
a) collecting a hot exhaust stream emitted by a combustion device through an exhaust channel;
b) increasing the dew point temperature of the hot exhaust stream;
c) reducing the velocity of the exhaust stream;
d) reducing the temperature of the exhaust stream such that a part of the gases in the exhaust stream are condensed into liquid form whereby the condensed liquid traps particles and noxious gases from the exhaust stream yielding a liquid extraction stream and a residual, substantially gaseous, exhaust stream; and
e) collecting the extraction stream.

In some preferred embodiments, the exhaust stream may in addition be washed with a liquid agent, e.g., water, to entrain particulates and gases from the exhaust stream. In some embodiments, the dew point of the exhaust stream may be elevated, e.g., by incorporation of water vapor therein, so as to facilitate condensation of liquid from the exhaust stream to enhance the entrapment of particulates and gases from the exhaust stream.

In brief summary, the apparatus comprises:
a) means for reducing the velocity of the exhaust stream from a combustion device;
b) means for reducing the temperature of the exhaust stream such that a part of the gases in the exhaust stream are condensed into liquid form such that the liquid traps particles and noxious gases from the exhaust stream yielding a liquid extraction stream and a residual, substantially gaseous, exhaust stream; and
c) means for collecting the extraction stream. As discussed below, in preferred embodiments the apparatus further comprises means for washing the exhaust stream with a liquid washing agent and means for increasing the dew point of the exhaust stream.

A principle advantage of the present invention is that it provides for extraction of particulate and gaseous pollutants from the exhaust streams of internal combustion engines, thereby reducing the effects of pollution. A large fraction of particulates smaller than 10 microns can be removed by the invention.

### Brief Description of Drawings

The invention is explained with reference to the drawing wherein:
Figure 1 is a schematic illustration of a method of the invention;
Figures 2 and 3 are perspective, cut-away views of an illustrative embodiment of an apparatus of the invention;
Figure 4 is a schematic illustration of an embodiment of a method of the invention wherein the dew point of the exhaust stream is elevated; and
Figure 5 is a schematic illustration of another apparatus for elevating the dew point of the exhaust stream.

These figures are intended to be merely illustrative and non-limiting.

### Detailed Description of Illustrative Embodiments

The present invention provides a method and an apparatus for reducing the contaminant emissions in the exhaust stream from combustion devices.

In brief summary, the method comprises:
a) collecting an exhaust stream emitted by a combustion device through an exhaust channel;
b) reducing the velocity of the exhaust stream;
c) reducing the temperature of the exhaust stream such that a part of the gases in the exhaust stream are condensed into liquid form such that the condensed liquid traps particles and noxious gases from the exhaust stream yielding a liquid extraction stream and a residual gaseous exhaust stream; and
d) collecting the extraction stream.

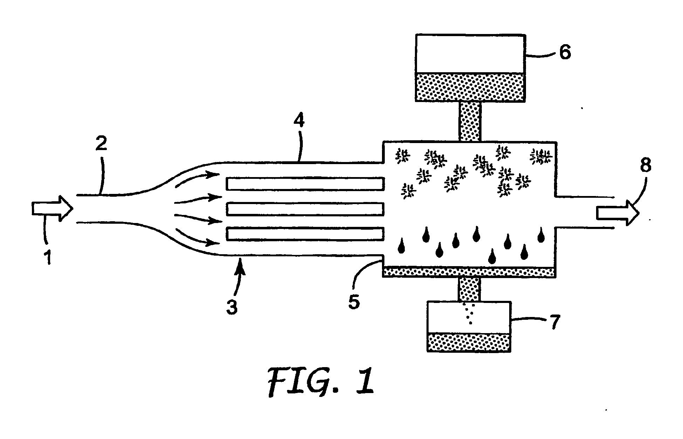

Figure 1 illustrates one embodiment of the method and apparatus of the invention. An exhaust stream 1 is collected from the exhaust tube 2 of an internal combustion engine (not shown). The exhaust stream is separated into multiple sub flows through tubes 3. The collective cross sectional area of tubes 3 is greater than that of exhaust tube 2. As a result, the velocity of the exhaust stream is reduced. While passing through tubes 3 the exhaust stream is typically also cooled, e.g., by passing cooling medium 4 against the outside of tubes 3. The slowed, preferably cooled exhaust stream then passes into a washing stage 5 where washing agent 6 is applied. Some of the gases in the exhaust stream will have condensed into liquid form (either here or earlier in tubes 3) and the drops of those condensed gases and of the applied washing agent will entrap particulates from the exhaust stream as well as some additional gases from the exhaust stream. These liquids with entrained particulates and gases, i.e., extraction stream and residual washing agent, respectively, are collected, e.g., in sump 7. The treated or residual exhaust stream 8 is then passed on and typically released to the environment. In accordance with the invention, residual exhaust stream 8 will contain lesser quantities of particulates and noxious gases than did original exhaust stream 1.

An effective way to reduce the velocity of the exhaust stream is to direct the exhaust stream through one or more channels having progressively greater cross section area. Just as a river of water slows as the channel widens, the speed at which the exhaust stream passes through the channel will slow as the cross section area is increased. The increase in cross sectional area may be provided at one or more discrete points (e.g., via a manifold) or may be provided substantially continuously over a portion of the course the exhaust stream follows. In some embodiments, the exhaust stream will be separated or divided into two or more sub flows in order to carry out the invention. Typically the exhaust stream will be separated into sub flows through several channels or tubes which may each have an individually smaller cross sectional area but which collectively have a larger cross sectional area than the cross sectional area of the exhaust tube from the internal combustion engine source. Use of several small channels or tubes is typically preferred because it facilitates heat extraction thereby facilitating condensation of part of the gases in the exhaust stream.

Slowing the flow of the exhaust stream facilitates washing as provided below and also facilitates cooling the exhaust stream. Typically, the exhaust stream will be cooled by transferring heat from the exhaust stream to a cooling medium. For example, the channels through which the exhaust stream is directed may be the tubes of a heat exchanger which extracts heat from exhaust stream to a cooling medium such as ambient air which is permitted to contact the outside of the tubes. In some embodiments, a stream of ambient air will be directed against the tubes, e.g., by fans. If desired, other cooling mediums such as chilled water or other refrigerants may be used.

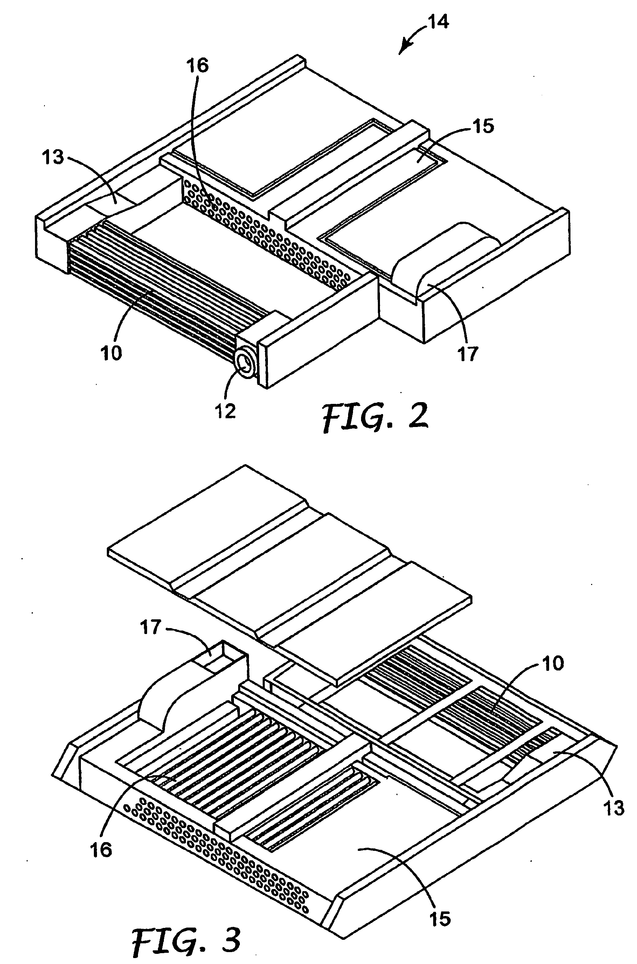

Turning to Figures 2 and 3, an illustrative embodiment of the apparatus of the invention comprises two main sections. The first section comprises a series of dissipating tubes 10 arranged in parallel with one end of each tube connected to the exit end of the exhaust tube 12 emitting the exhaust stream from the engine (not shown). The collective cross sectional area of all the dissipating tubes 10, i.e., the sum of the individual tubes, is greater than the cross sectional area of exhaust tube 12. The other ends of the dissipating tubes 10 connect with an intermediate tube 13 that channels the slowed exhaust stream to the condensation chamber 14 which is the second main part of this embodiment of the apparatus of the invention. In this embodiment, chamber 14 is a hollow block 15 traversed by a series of passing tubes 16. In the hollow chamber the exhaust stream coming from the first section of device, i.e., from the dissipation tubes 10, undergoes a second cooling at low speed when transversing through the interior of the hollow block 15 passing among the outside surfaces of the passing tubes 16 inside of which a cooling medium is circulated. Underneath the hollow block 15 is located a sump (not shown) for confining the liquid obtained by condensation. Later on, this liquid can be removed from the sump and treated for disposal, according to applicable environmental regulations. Following condensation, the treated exhaust stream is passed through exit 17 and expelled to the environment.

Depending on the type of the emission source to which the apparatus is used, air or water or other cooling mediums may provide cooling of the dissipation tubes. As an example, in the case of a mobile source such as a bus or truck, the apparatus may be mounted on an external portion of the roof of the vehicle such that ambient air passes over the apparatus as the vehicle moves. Fans may be used to blow the air to increase the effectiveness of the heat extraction. In the case of fixed sources, the device may be submerged in a cooling medium, e.g., circulating chilled water or other refrigerating liquid, to cool the dissipating tubes 10 and passing tubes 13. Though this solution ensures operation under any conditions, there is an energy expense and greater apparatus weight and bulk to be considered.

The dissipating tubes 10, as well as the hollow block 15, constituting the condensing chamber 14, are preferably made with high thermal conductivity metals in order to facilitate cooling the exhaust stream. It is also possible to fabricate the device using only thermally conductive polymeric materials, i.e., "Kevlar", depending on the use intended for the device.

It is important to mention that the effect of reducing the exhaust stream temperature, as it passes through the dissipating tubes 10, allows for a reduction of its volume upon entering the condensing chamber 14. This fact reduces the pressure of the gases in the dissipating tubes, reducing the backpressure of the exhaust stream, which is particularly important for effective operation of the internal combustion engine.

In some embodiments, a liquid washing agent such as water is applied to the exhaust stream. The washing agent may be applied by spraying, rinsing, or other conventional means. The washing agent absorbs some of the heat from the exhaust stream, thereby cooling it so as to facilitate condensation in accordance with the invention. The washing agent also may entrap some of the particulates and gases in the exhaust stream. The residual washing agent, i.e., washing agent containing entrained particulates and gases from the exhaust stream, is typically collected for subsequent treatment. In some instances, it will be recycled through the apparatus. If desired, the collected residual washing agent can be treated, e.g., filtered or settled to remove quantities of entrained particulate matter, and then disposed of through municipal sewage treatment.

Preferably the washing agent has a temperature below the temperature of the exhaust stream at the point where the liquid washing agent is applied to the exhaust stream. In this manner the washing agent will more effectively facilitate cooling of the exhaust stream to provide condensation of gases within the exhaust stream.

Because the washing step is carried out after the exhaust stream has been slowed, and preferably cooled to some extent, it is more effective for entrapping particulates and gases than it would otherwise be, i.e., as washing has been conventionally used in the past. By working with the exhaust stream at a relatively lower velocity and temperature and further achieving condensation of a fraction of the gaseous component in the exhaust stream, the method of the invention achieves entrapment (and hence removal) of submicron sized particles, a performance not known to have been achieved before. It is believed that the washing operation captures or entraps particulates and gaseous components from the exhaust stream via four mechanisms, i.e., (1) agglomeration of the particulates, particularly when wetted, making them tend to precipitate by gravity, (2) absorption of particulates into drops of the liquid, (3) condensation of gases on the surface of the droplets of liquid, and (4) solution of gases into the liquid. By whatever mechanism, we have shown that the method and apparatus disclosed herein effectively removes particulate and gaseous emissions from the exhaust stream.

In many embodiments the extraction stream and residual washing agent will be collected together in a holding tank and combined prior to subsequent processing and disposal.

To increase the amount of condensation of gases from the exhaust stream which can be achieved, thus tending to entrap more of the particulate fraction of the emissions and a greater proportion of the noxious gases in the exhaust stream, the method of the present invention may provide for increasing the dew point of the exhaust stream. This is typically achieved by introducing water into the exhaust stream. Water may be introduced into the exhaust stream by any of a number of ways, including but not limited to spraying or misting water (preferably hot) into the exhaust stream, passing the exhaust stream by a body or reservoir of water within a chamber, or injecting water vapor into the exhaust stream. A portion of the thusly applied water will be evaporated and absorbed into the exhaust stream. The action of evaporating the water serves to reduce the temperature of the exhaust stream. In addition, by attaining a greater water content, the exhaust stream attains a higher dew point

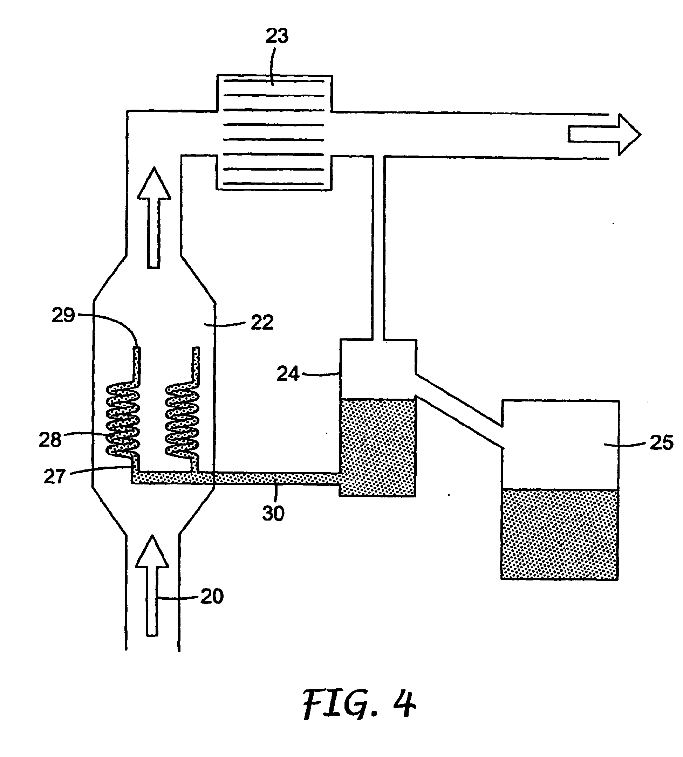

Figure 4 is a schematic illustration of such an embodiment. Exhaust stream 20 from an internal combustion engine (not shown) enters chamber or space 22 in which a liquid sprayer 27 injects water into the exhaust stream, thereby raising the dew point of the exhaust stream. Thus, when the exhaust stream reaches dissipating space 23 where it is cooled, condensation of gases from the exhaust stream will more readily occur. The condensed gases are removed from the dissipating space for storage and optional further treatment before being disposed of. In the illustrative embodiment show, the liquid sprayer 27 comprises one or a set of tubes in the shape of one or more coils 28. The free ends 29 of the tubes are open, permitting the injection of liquid into space 22. The other end of the tubes 27 are connected to a reservoir of fluid 24 with a tube 30 conveying the liquid towards the coils. This tube 30 connects each one of the coils with a reservoir of liquid 24 supplying liquid to the tubes 27. Thereby, each coil 28 is maintained always partially filled with liquid. The heat of the exhaust stream raises the temperature of the liquid contained within tubes 27, preferably boiling it so that moisture vapor is injected into the exhaust stream (and also to reduce the temperature of the exhaust stream).

When liquid is ejected through the free ends of the coils, the same amount thereof enters through the tube 30. The driving force produced by the pressure differential existing between the exit 29 to tubes 27 and the liquid reservoir 24 causes drawing of liquid from reservoir 24. If the exhaust stream is not flow, the water inside each tube 27 does not get hot and the pressure reaches equilibrium, avoiding the entering and exit of liquid from or towards each tube and coil.

In some embodiments, the condensed gases extracted from the exhaust stream in chamber 23 are collected and returned to reservoir 24. When the liquid reaches a certain level, in the proximity of its upper end, a part thereof pours by gravity to a storage reservoir 25 where it is collected for later treatment or disposal. Treated exhaust stream 26 is expelled to the environment.

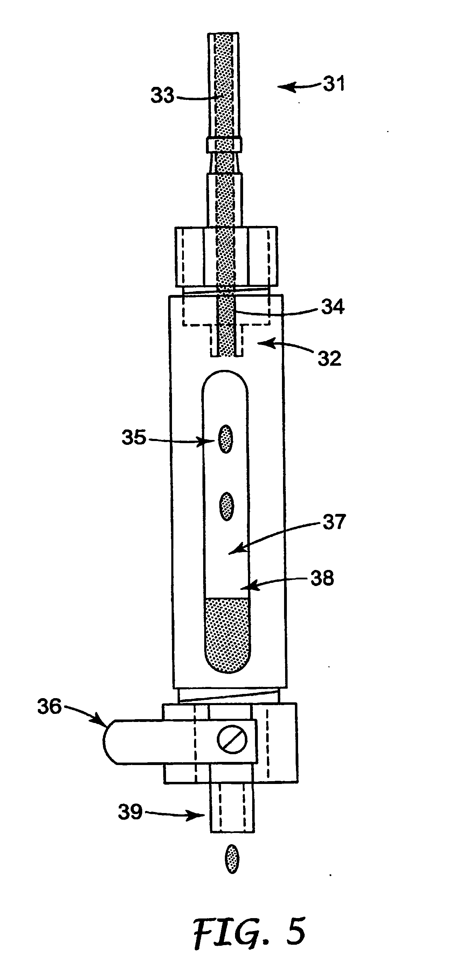

Figure 5 illustrates another manner of injecting water to raise the dew point of the exhaust stream. Liquid dosing device 31 providing a means for contacting the liquid, in the form of droplets, with the exhaust stream in a space whereupon the high temperature of the exhaust stream causes the liquid to evaporate. Liquid dosing device 31 comprises a hollow cylinder 32 that at its upper end has an entrance for the liquid 33, preferably a mechanical or electric driven valve, through which the liquid enters through orifice 34 located immediately beneath the entrance 33. The diameter of orifice 34 is modulated, thus permitting controlling the size of the droplets 35 in accordance with the nature of the liquid being injected. By controlling the size of the droplets, it is possible to control the volume of the liquid within the hollow cylinder 32. At the lower end of the hollow cylinder 32, a constriction element 36 is located, which adjusts the amount of droplets entering the space where the gases are humidified. As an example, if the liquid is water, adjusting the constriction element to a rate of about 16 droplets per second equals 1 ml. It is noted that the amount of liquid depends on the amount of gas flowing and the nature of the liquid. Optionally, the hollow cylinder 32 has a window 37 permitting visual monitoring of liquid and the entering movement of the liquid 38 to the inside of the cylinder. When there is a sufficient amount of liquid within the cylinder, the droplets exit thereof through the evacuation tube 39 and, driven by gravity, they enter the space or chamber encountering the exhaust stream and evaporate, thereby elevating the dew point of the exhaust stream.

The dew point of the exhaust stream will be substantially determined by its composition, i.e., principally the amount of moisture that it contains which will in turn be dependent upon the moisture content of the fuel burned and the air mixture which support combustion. The ease with which the exhaust stream can be induced to condense into liquid the gaseous components thereof will depend upon the temperature of the exhaust stream and the ambient conditions. For example, in cool winter time conditions it will typically be easy to cool the exhaust stream sufficiently so as to induce desired condensation. However, under hot conditions and particularly dry conditions such as prevail during the summer time in many locations, spontaneous condensation does not occur due to the prevailing low humidity and high temperature. Under such conditions it is preferable or even necessary to raise the dew point of the exhaust stream as described herein.

For a better understanding of the effect of the gas humidity and its possible condensation, it is useful to understand the concepts of relative and absolute humidity of gases. The maximum amount of water vapor a gas may contain, i.e., its saturation point, will depend in part upon its temperature (the higher the temperature, the higher will be the saturation point). Absolute humidity is the amount of water vapor contained in a volume of a gas (air), measured in grams of vapor per cubic meter of gas (air). In contrast, Relative Humidity is the amount of water vapor contained in the combustion gases (air) in relation with the maximum possible amount contained at said temperature. Relative humidity is expressed as percentage. By example, 80% of relative humidity means that the combustion gases contain 80 parts of water vapor in relation to the 100 parts possible to contain at saturation point. For the same amount of water vapor contained in the combustion gases, relative humidity varies inversely with temperature: the higher the temperature, the lower the relative humidity, and vice versa. As an example, one cubic meter of combustion gases contains 4.85 grams of water vapor. If the temperature of said gases is 0°C, they are saturated, at 100% relative humidity. However, if the temperature is 10°C, their relative humidity is only 52%. At a temperature of 30°C, their relative humidity will be only 16%. In all these cases, the absolute humidity is 4.85 grams of water per cubic meter of gas.

The exhaust stream as emitted by the combustion source comprises a particulate fraction and a gaseous fraction. In accordance with the invention, as it is cooled, a portion of the gaseous fraction will condense whereby at least a portion of the particulate fraction will become entrained in the condensate. In addition, a portion of the noxious gases within the exhaust stream will be entrained within the liquid condensate. The resultant liquid condensate or extract stream with entrained particulate fraction and entrained gases can be collected, thereby avoid emission of those components into the ambient environment.

In brief summary, the apparatus of the invention comprises:
a) means for reducing the velocity of the exhaust stream from a combustion device;
b) means for reducing the temperature of the exhaust stream such that a part of the gases in the exhaust stream are condensed into liquid form such that the liquid traps particles and noxious gases from the exhaust stream yielding a liquid extraction stream and a residual gaseous exhaust stream; and
c) means for collecting the extraction stream. As discussed below, in preferred embodiments the apparatus further comprises means for washing the exhaust stream with a liquid washing agent and means for increasing the dew point of the exhaust stream.

Typically, the means for reducing the velocity of the exhaust stream comprises one or more channels of increasing cross sectional area. The exhaust stream may be passed through the one or more channels that progressively increase in cross section area, or the cross section area may be increased in one or more discontinuous changes. For example, as shown in Figure 1, the exhaust channel may pass through a manifold into a set of smaller tubes.

In one embodiment, the apparatus comprises two sections; the first one comprising a series of dissipating tubes arranged in parallel, wherein one end of each tube is connected to the exit of the exhaust line from the source engine, and the other end connects to an intermediate tube, which in turn, connects to the second section of the device; said second section configured as an hollow block traversed by a series of passing tubes and comprising an exit for the not condensed residual gases. In accordance with the invention the sum of the cross section areas of the dissipating tubes is bigger than the cross section area of exhaust line from the engine. As a result the exhaust stream will have a lower velocity through the dissipating tubes than it does in the exhaust line.

To facilitate cooling of the exhaust stream, channels and chambers of the apparatus should be made from materials which are highly conductive of thermal energy. A typical choice will be metal which can be readily shaped and configured as desired, is durable, dimensionally stable at the necessary temperatures, etc. As will be understood, portions of the apparatus can also be made of other materials, e.g., suitable polymeric materials.

### Example 1

The following example is based on the analysis of the water contents generated by combustion in a diesel engine. The exhaust or combustion gases generated by the different sources depend on several factors, i.e. the type of fuel, air/fuel mixture, mechanical conditions, injectors, etc.

It is already known that several components produced by combustion generate wet particles, but due to their volatility, in this example we will refer only to the water generated as a product of combustion.

From the total analysis of a typical fuel, it was found that for each 100 grams of fuel its composition is:

| **Element** | **Weight Percentage** | **Number of moles** |
|---|---|---|
| Carbon | 86.4 | 7.2000 |
| Hydrogen | 13.6 | 13.6000 |
| Oxygen | 0.001 | 0.0003 |
| Nitrogen | 0.003 | 0.0001 |
| Sulfur | 0.09 | 0.0028 |
| Ash | 0.01 | ----- |

A series of calculations can determine the amount of water produced by combustion.

In this case, a complete combustion was considered (E = 0). Once the amount of water was obtained, the use of the Mollier Table permits determining the dew point.

| **Compound** | **Number of moles** |
|---|---|
| CO₂ | 7.2000 |
| H₂O | 6.8000 |
| SO₂ | 0.0028 |

| | |
|---|---|
| Fraction of excess air (E) | 0 |
| Humidity (moles of water/moles of dry air) X | 0.01116 |

| | |
|---|---|
| (E = 0 = complete combustion) | |

| **Number of moles** | **Moles/100 g of fuel** |
|---|---|
| Stoichiometric | 10.6 |
| Number of moles dry | 50.5 |
| Total number of water moles | 7.4 |
| Total number of moles exhausted | 53.9 |
| Grams of water obtained for every 100 g of fuel | 2.5 g |

Considering that air comprises oxygen and nitrogen:

| | |
|---|---|
| Grams of oxygen | 0.010 |
| Grams of nitrogen | 0.003 |
| Total | 0.013 |

| | |
|---|---|
| Grams of water/1 kg of air in the combustion | 18.9 |

For a concentration of 18.9 g of water vapor/1 kg of air, the dew point temperature is approximately 23.8°C.

For simplicity, the density of the combustion gases was assumed to be equal to that of air at ~35°C.

In this conditions, for the occurrence of spontaneous condensation, the temperature of the gas shall be lower than the dew point temperature, namely 23.8°C. Therefore, it will suffice to cool the gases to a temperature lower than 23.8°C to produce condensation of the gases. This condition occurs mainly during wintertime in some climates, but not during summertime in some climates, and not curing other seasons in some locations where the average temperatures may be higher than 30°C. Accordingly, for the present invention it is necessary under such conditions to cool the gases at temperatures lower than this, by using a simple refrigeration system.

One alternative for producing condensation of the combustion gases during summertime is to increase the humidity of the gases by injecting water vapor.

Let us suppose the invention is installed onto a mobile source, namely a bus. In this case, the amount of emitted gases is variable, depending on the bus being detained or going. Simplifying the model, let us assume that this source emits an average of 50 liters of combustion gases per second, meaning that in 20 seconds it will emit 1 m³ of combustion gases. According to the exemplary analysis, the amount of water generated by the combustion of the diesel engine is 18.9 g/m³, and to that we add the water provided by the device of the invention. Considering that the device has 4 coils, each one generates a flow of 0.5 g/second of liquid that is vaporized. This amounts to 2 g/second of water vapor, in other words, it will take 20 seconds (4 coils x 0,5 g/second) to produce 1 m³. Consequently, the device provides 40 g of water vapor, which add to the 18.9 g generated by the combustion. The Mollier Table states that, under these conditions, the temperature of the dew point raises to 43°C. Then, if the combustion gases are cooled to this temperature, condensation will occur. To cool the gases at this temperature presents no difficulties, permitting therefore to produce condensation in a mobile source during summertime.

### Example 2

In tests on a diesel powered bus on a winter day having ambient temperatures of from about 4°C to 12°C, up to 80 liters of condensed liquid were collected.

## Claims

1. A method for reducing the contaminant emissions including noxious gases and particulate material in an exhaust stream (1,20) from a combustion device comprising:
a) collecting the hot exhaust stream (1,20) emitted by said combustion device through an exhaust channel;
b) increasing the dew point of said hot exhaust stream (1,20);
c) reducing the velocity of said hot exhaust stream (1,20) having an increased dew point;
d) reducing the volume and pressure of said hot exhaust stream (1,20) having an increased dew point by cooling said stream (1,20), thereby causing partial condensation of the gases using the particulate material as condensing nuclei such that a part of the gases in said exhaust stream (1,20) are condensed into liquid form such that said liquid traps particles and noxious gases from said exhaust stream (1,20) yielding a liquid extraction stream and a residual gaseous, non-condensed stream; and
e) collecting said condensed extraction stream.

2. The method of claim 1 wherein said reducing the velocity of said exhaust stream (1,20) comprises separating said exhaust stream (1,20) into multiple sub flows.

3. The method of claim 1 or 2 wherein said reducing the velocity of said exhaust stream (1,20) comprises directing said exhaust stream (1,20) into one or more channels (3,10) having a greater collective cross-sectional area than the cross sectional area of said exhaust channel (2,12).

4. The method of any one of claims 1 to 3 wherein said reducing the temperature of said exhaust stream (1,20) comprises transferring heat from said exhaust stream (1,20) to a cooling medium (4).

5. The method of any one of claims 1 to 4 wherein said condensed extraction stream is treated such it is suitable to be disposed of within a municipal sewage network.

6. The method of any one of claims 1 to 5 wherein the dew point of said exhaust stream (1,20) is increased by adding water to said exhaust stream (1,20) prior to substantially reducing the temperature of said exhaust stream (1,20).

7. The method of any one of claims 1 to 6 wherein said dew point of said exhaust stream (1,20) is increased by introducing water into said exhaust stream (1,20).

8. The method of claim 7 wherein said introducing water into said exhaust stream (1,20) comprises spraying water into said exhaust stream (1,20).

9. The method of claim 7 or 8 wherein said introducing water into said exhaust stream (20) comprises maintaining a source (27) of liquid water within a chamber (22) through which said exhaust stream (20) passes such that water from said source (27) is evaporated into said exhaust stream (20).

10. The method of any one of claims 7 to 9 wherein said introducing water into said exhaust stream (1,20) comprises injecting water vapor into said exhaust stream (1,20).

11. The method of any one of claims 6 to 10 wherein said exhaust stream (1,20) with elevated dew point is cooled so as to cause condensation of at least some of the gases contained therein, thereby trapping particulates and gases from said exhaust stream in an extract stream.

12. The method of any one of claims 1 to 11 wherein said combustion device is an internal combustion engine used to power a vehicle and/or a fixed combustion device as, for example, a burner.

13. A device for reducing the contaminant emissions in an exhaust stream (1,20) from a combustion source comprising:
a) means (12) for receiving a hot exhaust stream (1,20) emitted by a combustion source from an exhaust channel;
b) means (27) for increasing the dew point of said hot exhaust stream (1,20);
c) means (3,10) for reducing the velocity and pressure of said hot, increased dew point exhaust stream (1,20);
d) means (3,10) for reducing the temperature of said exhaust stream (1,20) with increased dew point such that a part of the gases in said exhaust stream (1,20) are condensed into liquid form such that said liquid traps particles and noxious gases from said exhaust stream (1,20) yielding a liquid extraction stream and a residual gaseous exhaust stream; and
e) means (17) for collecting said extraction stream.

14. The device of claim 13 wherein said means (3,10) for reducing the velocity of said exhaust stream comprises one or more channels (3,10) having a greater collective cross sectional area than the cross section area of said exhaust channel (2,12).

15. The device of claim 13 or 14, further comprising:
a) means (27) for injecting water into said hot exhaust stream (1,20), thus increasing the humidity of said stream, thereby increasing its dew point temperature; and
b) a condensing chamber (23) for the cooled exhaust stream with increased dew point comprising a sump (7,25) for confining the liquid obtained from the condensed gases.

16. The device of any one of claims 13 to 15 comprising means (27) for increasing said dew point of said exhaust stream (1,20) by adding water to said exhaust stream (1,20) prior to substantially reducing the temperature of said exhaust stream (1,20).

17. The device of any one of claims 13 to 16 comprising means (27) for introducing liquid water or water vapor from said aqueous humidify-ing/neutralizing solution into said exhaust stream (1,20).

18. The device of claim 16, wherein said means (27) for increasing the dew point comprises a source (24) of liquid through part of which the hot exhaust stream (1,20) is passed such that the heat of said hot exhaust stream (1,20) raises the temperature of said liquid to vaporize it.

19. The device of claim 18 wherein said liquid source (24) has an exit near its upper end permitting exiting the liquid by gravity towards another deposit (25) located besides said liquid source (24).

20. The device of any one of claims 13 to 19 wherein said device further comprises a liquid dosing apparatus (31) comprising a hollow cylinder (32) having at its upper end a liquid entrance (33); immediately underneath said entrance there is a round orifice (34) permitting entrance of liquid to this hollow cylinder (32); at the lower end of said hollow cylinder (32) there is a constricting element (36) permitting to adjust the number of droplets (35) entering said space (22) for humidifying the gases.

21. The device of claim 20 wherein said hollow cylinder (32) has a window (37) permitting to visual monitoring of the liquid level and droplets movement.

22. The device of claim 20 or 21
wherein underneath said constricting element (36) there is an exit tube (39) for conveying the droplets (35) to the space (22) wherein the gases are humidified, and for evaporating the droplets (35) due to their high temperature, thus reducing the temperature of the dew point of the gases within the space (22).

23. The device of any one of claims 20 to 22 wherein in said liquid entrance (33) is an electric or mechanical valve.

24. The device of any one of claims 13 to 23 wherein said means (3,10,23) for reducing the temperature of said exhaust stream are for simultaneously reducing the pressure and volume of said exhaust stream (1,20).

25. The device of any one of claims 13 to 24, wherein said combustion source is an internal combustion engine for powering a vehicle and/or a fixed combustion device as, for example, a burner.

## Patentansprüche

1. Verfahren zum Reduzieren der Schadstoffemissionen einschließlich von Schadgasen und Partikeln in einem Abgasstrom (1,20) aus einer Verbrennungsvorrichtung, mit folgenden Schritten:
a) Aufnehmen des von der Verbrennungsvorrichtung ausgegebenen warmen Abgasstroms (1,20) durch einen Abgaskanal (2,12);
b) Erhöhen des Taupunkts des warmen Abgasstroms (1,20);
c) Reduzieren der Geschwindigkeit des einen erhöhten Taupunkt aufweisenden warmen Abgasstroms (1,20);
d) Reduzieren des Volumens und des Drucks des einen erhöhten Taupunkt aufweisenden warmen Abgasstroms (1,20) durch Kühlen des Stroms (1,20) und **dadurch** bewirkte Teilkondensation der Gase durch Verwendung der Partikel als Kondensationskerne derart, dass ein Teil der in dem Abgasstrom (1,20) befindlichen Gase in flüssige Form kondensiert wird und **dadurch** die Flüssigkeit Partikel und Schadgase aus dem Abgasstrom (1,20) einschließt, wobei ein Flüssigkeitsextraktionsstrom und ein gasförmiger, nicht kondensierter Reststrom erzeugt werden; und
e) Aufnehmen des kondensierten Extraktionsstroms.

2. Verfahren nach Anspruch 1, bei dem beim Reduzieren der Geschwindigkeit des Abgasstroms (1,20) der Abgasstrom (1,20) in mehrere Teilströme aufgeteilt wird.

3. Verfahren nach Anspruch 1 oder 2, bei dem beim Reduzieren der Geschwindigkeit des Abgasstroms (1,20) der Abgasstrom (1,20) in einen oder mehrere Kanäle (3,10) gelenkt wird, die einen größeren Gesamtquerschnittsbereich haben als der Querschnittsbereich des Abgaskanals (2,12).

4. Verfahren nach einem der Ansprüche 1 bis 3, bei dem beim Reduzieren der Temperatur des Abgasstroms (1,20) Wärme aus dem Abgasstrom (1,20) auf ein Kühlmedium übertragen wird.

5. Verfahren nach einem der Ansprüche 1 bis 4, bei dem der kondensierte Extraktionsstrom derart behandelt wird, dass er in einem städtischen Abwassernetz entsorgt werden kann.

6. Verfahren nach einem der Ansprüche 1 bis 5, bei dem der Taupunkt des Abgasstroms (1,20) erhöht wird, indem dem Abgasstrom (1,20) Wasser hinzugefügt wird, bevor die Temperatur des Abgasstroms (1,20) wesentlich reduziert wird.

7. Verfahren nach einem der Ansprüche 1 bis 6, bei dem der Taupunkt des Abgasstroms (1,20) erhöht wird, indem Wasser in den Abgasstrom (1,20) eingeführt wird.

8. Verfahren nach Anspruch 7, bei dem das Einführen von Wasser in den Abgasstrom (1,20) das Sprühen von Wasser in den Abgasstrom (1,20) umfasst.

9. Verfahren nach Anspruch 7 oder 8, bei dem das Einführen von Wasser in den Abgasstrom (20) das Anordnen einer Quelle (27) von in flüssiger Form vorliegendem Wasser in einer Kammer (22) umfasst, durch die der Abgasstrom (20) hindurchläuft, derart, dass Wasser aus der Quelle (27) in den Abgasstrom (20) verdunstet.

10. Verfahren nach einem der Ansprüche 7 bis 9, bei dem das Einführen von Wasser in den Abgasstrom (1,20) das Injizieren von Wasserdampf in den Abgasstrom (1,20) umfasst.

11. Verfahren nach einem der Ansprüche 6 bis 10, bei dem der einen erhöhten Taupunkt aufweisende Abgasstrom (1,20) derart gekühlt wird, dass eine Kondensation mindestens einiger der in ihm enthaltenen Gase bewirkt wird, wodurch Partikel und Gase aus dem Abgasstrom in einem Extraktionsstrom mitgeführt werden.

12. Verfahren nach einem der Ansprüche 1 bis 11, bei dem die Verbrennungsvorrichtung ein Verbrennungsmotor für ein Fahrzeug und/oder eine fest installierte Verbrennungsvorrichtung wie z.B. ein Brenner ist.

13. Vorrichtung zum Reduzieren der Schadstoffemissionen in einem Abgasstrom (1,20) aus einer Verbrennungsquelle, mit:
a) einer Vorrichtung (12) zum Aufnehmen des von der Verbrennungsquelle ausgegebenen warmen Abgasstroms (1,20) aus einem Abgaskanal;
b) einer Vorrichtung (27) zum Erhöhen des Taupunkts des warmen Abgasstroms (1,20);
c) einer Vorrichtung (3,10) zum Reduzieren der Geschwindigkeit und des Drucks des einen erhöhten Taupunkt aufweisenden warmen Abgasstroms (1,20);
d) einer Vorrichtung (3,10) zum Reduzieren der Temperatur des einen erhöhten Taupunkt aufweisenden Abgasstroms (1,20) derart, dass ein Teil der in dem Abgasstrom (1,20) befindlichen Gase in flüssige Form kondensiert wird und **dadurch** die Flüssigkeit Partikel und Schadgase aus dem Abgasstrom (1,20) einschließt, wobei ein Flüssigkeitsextraktionsstrom und ein gasförmiger Restabgasstrom erzeugt werden; und
e) einer Vorrichtung (17) zum Aufnehmen des Extraktionsstroms.

14. Vorrichtung nach Anspruch 13, bei der die Vorrichtung (3,10) zum Reduzieren der Geschwindigkeit des Abgasstroms einen oder mehrere Kanäle (3,10) aufweist, die einen größeren Gesamtquerschnittsbereich haben als der Querschnittsbereich des Abgaskanals (2,12).

15. Vorrichtung nach Anspruch 13 oder 14, ferner mit:
a) einer Vorrichtung (27) zum Injizieren von Wasser in den warmen Abgasstrom (1,20) zum Erhöhen der Feuchtigkeit und **dadurch** der Taupunkttemperatur des Stroms; und
b) einer Kondensationskammer (23) für den einen erhöhten Taupunkt aufweisenden gekühlten Abgasstrom, mit einer Senke (7,25) zum Auffangen der aus den kondensierten Gasen erhaltenen Flüssigkeit.

16. Vorrichtung nach einem der Ansprüche 13 bis 15, mit einer Vorrichtung (27) zum Erhöhen des Taupunkts des Abgasstroms (1,20) durch Hinzufügen von Wasser zu dem Abgasstrom (1,20), bevor die Temperatur des Abgasstroms (1,20) wesentlich reduziert wird.

17. Vorrichtung nach einem der Ansprüche 13 bis 16, mit einer Vorrichtung (27) zum Einführen von Wasser in flüssiger oder Dampfform aus der wässrigen Befeuchtungs-/Neutralisierungslösung in den Abgasstrom (1,20).

18. Vorrichtung nach Anspruch 16, bei der die Vorrichtung (27) zum Erhöhen des Taupunkts eine Flüssigkeitsquelle (24) aufweist, die teilweise derart von dem warmen Abgasstrom (1,20) durchströmt wird, dass die Wärme des warmen Abgasstroms (1,20) die Temperatur der Flüssigkeit erhöht, um diese zu verdunsten zu lassen.

19. Vorrichtung nach Anspruch 18, bei der das Flüssigkeitsreservoir (24) nahe seinem oberen Ende einen Auslass aufweist, durch den hindurch die Flüssigkeit unter Schwerkrafteinfluss in eine weitere Sammelvorrichtung (25) austreten kann, die neben der Flüssigkeitsquelle (24) angeordnet ist.

20. Vorrichtung nach einem der Ansprüche 13 bis 19, wobei die Vorrichtung ferner eine Flüssigkeitsdosierungsvorrichtung (31) mit einem Hohlzylinder (32) aufweist, an dessen oberen Ende ein Flüssigkeitseinlass (33) angeordnet ist; wobei unmittelbar unterhalb des Einlasses eine runde Öffnung (34) vorgesehen ist, die den Eintritt von Flüssigkeit in diesen Hohlzylinder (32) erlaubt; und wobei an dem unteren Ende des Hohlzylinders (32) ein Einschnürungselement (36) angeordnet ist, mit dem die Anzahl von Tröpfchen (35), die in den Raum (22) zum Befeuchten der Gase eintreten, eingestellt werden kann.

21. Vorrichtung nach Anspruch 20, bei der der Hohlzylinder (32) ein Fenster (37) zur Sichtkontrolle des Flüssigkeitspegels und der Tröpfchenbewegung aufweist.

22. Vorrichtung nach Anspruch 20 oder 21, bei der unterhalb des Einschnürungselements (36) ein Auslassrohr (39) vorgesehen ist, um die Tröpfchen (35) in den Raum (22), in dem die Gase befeuchtet werden, zu befördern, und um die Tröpfchen (35) aufgrund ihrer hohen Temperatur verdunsten zu lassen und **dadurch** die Temperatur des Taupunkts der in dem Raum (22) befindlichen Gase zu reduzieren.

23. Vorrichtung nach einem der Ansprüche 20 bis 22, bei der in dem Flüssigkeitseinlass (33) ein elektrisches oder mechanisches Ventil angeordnet ist.

24. Vorrichtung nach einem der Ansprüche 13 bis 23, bei der die Vorrichtung (3,10,23) zum Reduzieren der Temperatur des Abgasstroms zum gleichzeitigen Reduzieren des Drucks und des Volumens des Abgasstroms (1,20) ausgelegt ist.

25. Vorrichtung nach einem der Ansprüche 13 bis 24, bei der die Verbrennungsquelle ein Verbrennungsmotor für ein Fahrzeug und/oder eine fest installierte Verbrennungsvorrichtung wie z.B. ein Brenner ist.

## Revendications

1. Procédé de réduction des émissions contaminantes comprenant des gaz nocifs et de la matière particulaire dans un flux d'échappement (1, 20) provenant d'un dispositif de combustion, comprenant les étapes consistant à :
(a) collecter le flux d'échappement chaud (1, 20) émis par ledit dispositif de combustion à travers d'un canal d'échappement (2,12);
(b) accroître le point de rosée dudit flux d'échappement chaud (1, 20) ;
(c) réduire la vélocité dudit flux d'échappement chaud (1, 20) ayant un point de rosée accru ;
(d) réduire le volume et la pression dudit flux d'échappement chaud (1, 20) ayant un point de rosée accru en refroidissant ledit flux (1, 20), causant ainsi une condensation partielle des gaz en utilisant la matière particulaire comme noyau de condensation de manière à ce qu'une partie des gaz dans ledit flux d'échappement (1, 20) soient condensés sous une forme liquide de manière à ce que ledit liquide capture les particules et les gaz nocifs provenant dudit flux d'échappement (1, 20) en produisant un flux d'extraction liquide et un flux résiduel gazeux non condensé ; et
(e) collecter ledit flux d'extraction condensé.

2. Procédé selon la revendication 1, dans lequel ladite réduction de la vélocité dudit flux d'échappement (1, 20) comprend la séparation dudit flux d'échappement (1, 20) en plusieurs sous-flux.

3. Procédé selon la revendication 1 ou 2, dans lequel ladite réduction de la vélocité dudit flux d'échappement (1, 20) comprend l'orientation dudit flux d'échappement (1, 20) dans un ou plusieurs canau(x) (3, 10) ayant une superficie en coupe collective supérieure à la superficie en coupe dudit canal d'échappement (2, 12).

4. Procédé selon l'une quelconque des revendications 1 à 3, dans lequel ladite réduction de la température dudit flux d'échappement (1, 20) comprend le transfert de la chaleur dudit flux d'échappement (1, 20) à un milieu de refroidissement (4).

5. Procédé selon l'une quelconque des revendications 1 à 4, dans lequel ledit flux d'extraction condensé est traité de manière à pouvoir être jeté dans un réseau d'égout municipal.

6. Procédé selon l'une quelconque des revendications 1 à 5, dans lequel le point de rosée dudit flux d'échappement (1, 20) est accru en ajoutant de l'eau audit flux d'échappement (1, 20) avant de réduire sensiblement la température dudit flux d'échappement (1, 20).

7. Procédé selon l'une quelconque des revendications 1 à 6, dans lequel ledit point de rosée dudit flux d'échappement (1, 20) est accru en introduisant de l'eau dans ledit flux d'échappement (1, 20).

8. Procédé selon la revendication 7, dans lequel ladite introduction d'eau dans ledit flux d'échappement (1, 20) comprend la pulvérisation d'eau dans ledit flux d'échappement (1, 20).

9. Procédé selon la revendication 7 ou 8, dans lequel ladite introduction d'eau dans ledit flux d'échappement (20) comprend le maintien d'une source (27) d'eau liquide dans une chambre (22) à travers laquelle ledit flux d'échappement (20) passe, de manière à ce que l'eau de ladite source (27) s'évapore dans ledit flux d'échappement (20).

10. Procédé selon l'une quelconque des revendications 7 à 9, dans lequel ladite introduction d'eau dans ledit flux d'échappement (1, 20) comprend l'injection de vapeur d'eau dans ledit flux d'échappement (1, 20).

11. Procédé selon l'une quelconque des revendications 6 à 10, dans lequel ledit flux d'échappement (1, 20) ayant un point de rosée accru est refroidi de manière à entraîner la condensation d'au moins une partie des gaz contenus dans celui-ci, capturant ainsi la matière particulaire et les gaz dudit flux d'échappement dans un flux d'extraction.

12. Procédé selon l'une quelconque des revendications 1 à 11, dans lequel ledit dispositif de combustion est un moteur à combustion interne utilisé pour alimenter en énergie un véhicule et / ou un dispositif de combustion fixe comme, par exemple, un brûleur.

13. Dispositif de réduction des émissions contaminantes dans un flux d'échappement (1, 20) provenant d'un dispositif de combustion, comprenant :
(a) un moyen (12) destiné à recevoir un flux d'échappement chaud (1, 20) émis par une source de combustion d'un canal d'échappement ;
(b) un moyen (27) destiné à accroître le point de rosée dudit flux d'échappement chaud (1, 20) ;
(c) un moyen (3, 10) destiné à réduire la vélocité et la pression dudit flux d'échappement chaud (1, 20) ayant un point de rosée accru ;
(d) un moyen (3, 10) destiné à réduire la température dudit flux d'échappement chaud (1, 20) ayant un point de rosée accru de manière à ce qu'une partie des gaz dans ledit flux d'échappement (1, 20) soient condensés sous une forme liquide de manière à ce que ledit liquide capture les particules et les gaz nocifs provenant dudit flux d'échappement (1, 20) en produisant un flux d'extraction liquide et un flux d'échappement résiduel gazeux ; et
(e) un moyen (17) destiné à collecter ledit flux d'extraction.

14. Dispositif selon la revendication 13, dans lequel ledit moyen (3, 10) destiné à réduire la vélocité dudit flux d'échappement comprend un ou plusieurs canau(x) (3, 10) ayant une superficie en coupe collective supérieure à la superficie en coupe dudit canal d'échappement (2, 12).

15. Dispositif selon la revendication 13 ou 14, comprenant en outre :
a) un moyen (27) destiné à injecter de l'eau dans ledit flux d'échappement chaud (1, 20), augmentant ainsi l'humidité dans ledit flux, augmentant ainsi sa température de point de rosée ; et
b) une chambre de condensation (23) pour le flux d'échappement refroidi ayant un point de rosée accru, comprenant un bassin collecteur (7, 25) pour confiner le liquide obtenu à partir des gaz condensés.

16. Dispositif selon l'une quelconque des revendications 13 à 15, comprenant un moyen (27) destiné à accroître ledit point de rosée dudit flux d'échappement (1, 20) en ajoutant de l'eau audit flux d'échappement (1, 20) avant de réduire sensiblement la température dudit flux d'échappement (1, 20).

17. Procédé selon l'une quelconque des revendications 13 à 16, comprenant un moyen (27) destiné à introduire de l'eau liquide ou de la vapeur d'eau provenant de ladite solution aqueuse d'humidification / de neutralisation dans ledit flux d'échappement (1, 20).

18. Dispositif selon la revendication 16, dans lequel ledit moyen (27) destiné à accroître le point de rosée comprend une source (24) de liquide à travers une partie de laquelle on fait passer le flux d'échappement chaud (1, 20), de manière à ce que la chaleur dudit flux d'échappement chaud (20) accroisse la température dudit liquide pour vaporiser celui-ci.

19. Dispositif selon la revendication 18, dans lequel ledit réservoir de liquide (24) comporte une sortie à proximité de son extrémité supérieure permettant la sortie du liquide par gravité vers un autre dépôt (25) situé à côté dudit réservoir de liquide (24).

20. Dispositif selon l'une quelconque des revendications 13 à 19, dans lequel le dispositif comprend en outre un appareil de dosage de liquide (31) comprenant un cylindre creux (32) présentant au niveau de son extrémité supérieure une entrée de liquide (33) ; immédiatement sous ladite entrée se trouve un orifice rond (34) permettant l'entrée du liquide dans ce cylindre creux (32) ; au niveau de l'extrémité inférieure dudit cylindre creux (32) se trouve un élément de constriction (36) permettant d'ajuster le nombre de gouttelettes (35) entrant dans ledit espace (22) pour humidifier les gaz.

21. Dispositif selon la revendication 20, dans lequel ledit cylindre creux (32) comporte une fenêtre (37) permettant la surveillance visuelle du niveau de liquide et du mouvement des gouttelettes.

22. Dispositif selon la revendication 20 ou 21, dans lequel sous ledit élément de constriction (36) se trouve un tube de sortie (39) destiné à transporter les gouttelettes (35) vers l'espace (22) dans lequel les gaz sont humidifiés et à évaporer les gouttelettes (35) en raison de leur température élevée, réduisant ainsi la température du point de rosée des gaz dans l'espace (22).

23. Dispositif selon l'une quelconque des revendications 20 à 22, dans lequel dans ladite entrée de liquide (33) se trouve une vanne électrique ou mécanique.

24. Dispositif selon l'une quelconque des revendications 13 à 23, dans lequel ledit moyen (3, 10, 23) destiné à réduire la température dudit flux d'échappement permet de réduire simultanément la pression et le volume dudit flux d'échappement (1, 20).

25. Dispositif selon l'une quelconque des revendications 13 à 24, dans lequel ladite source de combustion est un moteur à combustion interne destiné à alimenter en énergie un véhicule et / ou un dispositif de combustion fixe tel que, par exemple, un brûleur.
